Europäisches Patentamt

European Patent Office

Office européen des brevets

(11) Veröffentlichungsnummer: **0 385 356**
**A2**

## (12) EUROPÄISCHE PATENTANMELDUNG

(21) Anmeldenummer: 90103710.1

(22) Anmeldetag: 26.02.90

(51) Int. Cl.[5]: **B29C 43/36, B29C 67/14**

(30) Priorität: 03.03.89 DE 3906810

(43) Veröffentlichungstag der Anmeldung:
05.09.90 Patentblatt 90/36

(84) Benannte Vertragsstaaten:
AT BE CH DE ES FR GB IT LI NL SE

(71) Anmelder: BASF Aktiengesellschaft
Carl-Bosch-Strasse 38
D-6700 Ludwigshafen(DE)

(72) Erfinder: Schuermann, Helmut
Burgunderstrasse 13
D-6701 Maxdorf(DE)
Erfinder: Laux, Rudi
Von-Ketteler-Strasse 30
D-6704 Mutterstadt(DE)
Erfinder: Leonhard, Christian
H 2,1
D-6800 Mannheim 1(DE)

(54) **Presswerkzeug zur Herstellung von Formkörpern, insbesondere Blattfedern aus Faserverbundwerkstoffen.**

(57) Zur Herstellung eines Formkörpers aus Faserverbundwerkstoffen wird ein Preßwerkzeug benutzt, welches aus zwei gegeneinander bewegbaren Werkzeughälften (1,2) besteht, von denen die eine Werkzeughälfte eine dem Formkörper entsprechende Kavität (4) und die andere Werkzeughälfte einen in die Kavität einführbaren Formstempel (3) enthält. Um die Genauigkeitsanforderungen an das Tauchkantenspiel zu reduzieren und um die Kavität vollständig zu verschließen sind an dem Formstempel Dichtleisten (5) vorgesehen. Diese sind an den Längsseiten des Formstempels und mit ihm form- und/oder kraftschlüssig verbunden.

EP 0 385 356 A2

# Preßwerkzeug zur Herstellung von Formkörpern, insbesondere Blattfedern aus Faserverbundwerkstoffen

Die Erfindung betrifft ein Preßwerkzeug zur Herstellung von Formkörpern, insbesondere Blattfedern aus Faserverbundwerkstoffen, mit zwei gegeneinander bewegbaren Werkzeughälften, von denen die eine Werkzeughälfte eine dem Formkörper entsprechende Kavität und die andere Werkzeughälfte einen in die Kavität einführbaren Formstempel enthält.

Preßwerkzeuge dieser Art, sogenannte Tauchkantenwerkzeuge sind bekannt. Im allgemeinen sind sie entsprechend der Formkörpergeometrie lang und schmal ausgeführt. Nachteilig ist jedoch, daß diese langen Werkzeuge äußerst präzise hergestellt werden müssen und beim Aufspannen auf der Presse nicht verformt werden dürfen. Auch darf durch die Beheizung des Werkzeuges kein thermischer Verzug auftreten. Entsprechend aufwendig muß die Temperaturregelung ausgelegt werden. Der Grund für die hohen Anforderungen liegt darin, daß eine sehr genaue Passung zwischen Formstempel und Kavität eingehalten werden muß ("Tauchkantenspiel"). Zu große Spalte führen dazu, daß Matrixharz beim Pressen über die Tauchkante ausfließt und beispielsweise beim Pressen von Blattfedern die besonders hochbelasteten Ränder der Blattfeder dann zu wenig Harz enthalten, so daß von hier eine frühzeitige Rißbildung beginnt. Außerdem besteht die Gefahr, daß Fasermaterial in einen zu großen Spalt gedrückt werden, so daß die Fasern in der Feder wellig liegen, was wiederum die Schwingfestigkeit solcher Federn sehr stark mindert. Alle Maßnahmen, sehr enge Toleranzen im Tauchkantenspiel einzuhalten verursachen erhebliche Kosten. Zudem besteht - vor allem in einer Serienfertigung - die Gefahr, daß sich Formstempel und Kavität berühren und das Werkzeug beschädigt wird.

Mit der Erfindung soll ein Preßwerkzeug geschaffen werden, welches von den geschilderten Mängeln frei ist und insbesondere ein vergrößertes Tauchkantenspiel erlaubt. Als Besonderheit ist zusätzlich eine wirksame Abdichtung zwischen den Werkzeughälften gefordert.

Zur Lösung dieser Aufgabe wird die Maßnahme nach dem Kennzeichen des Anspruchs 1 vorgeschlagen.

Durch das Anfügen von flexiblen Dichtleisten an dem freien Ende des Formstempels werden die Tauchkanten der Preßwerkzeuge geschont. Eine direkte Berührung zwischen Tauchkante und Kavität ist möglich. Das Zufahren des Werkzeuges ist einfacher.

Als Werkstoff für die Dichtleisten eignen sich praktisch alle elastischen, temperaturbeständigen Kunststoffe, beispielsweise Silikonkautschuk (PTFE).

Die Dichtleiste hat zweckmäßigerweise die Form eines endlosen Profilstranges. Bei entsprechender Querschnittform ist eine sehr rasche Befestigung am Formstempel bzw. eine sehr rasche Auswechselung möglich. Desweiteren können mit Hilfe der Dichtleisten die Kanten von Formkörpern bereits beim Preßvorgang gerundet werden. Hierdurch wird die Gebrauchstauglichkeit von Formkörpern, bei Blattfedern deren Schwingfestigkeit, verbessert. Schließlich verhindert die flexible Dichtleiste auch, daß Matrixharz über die Tauchkanten ausfließt, so daß die Verschmutzung des Werkzeuges beim Preßvorgang deutlich geringer wird.

Weitere vorteilhafte Ausgestaltungen des erfindungsgemäßen Preßwerkzeuges sind Gegenstand der Unteransprüche 2 bis 4.

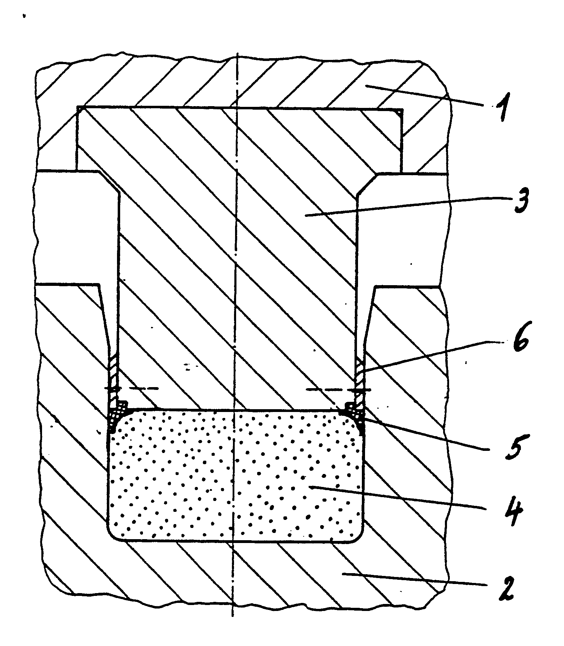

Die Erfindung wird nachstehend unter Hinweis auf die Zeichnung anhand eines Ausführungsbeispieles näher erläutert.

Das in der einzigen Figur dargestellte Preßwerkzeug dient zur Herstellung von Faserverbund-Blattfedern. Es weist eine obere Werkzeughälfte (1) und eine untere Werkzeughälfte (2) auf. In der unteren Werkzeughälfte ist eine Kavität (4) ausgebildet für die Aufnahme des zu verpressenden Materials. Die obere Werkzeughälfte enthält einen Formstempel (3), an dessen Längsseiten Dichtleisten (5) mittels Anpreßleisten (6) befestigt sind. Die an beiden Längsseiten des Formstempels angebrachten Dichtleisten sind so bemessen, daß der Formstempel beim Zufahren des Werkzeuges die Kavität vollständig verschließt. Ihre Befestigung erfolgt nach dem Nut-Feder-Prinzip, wobei die Dichtleisten (5) an der Seitenfläche des Formstempels anschließen und die Anpreßleisten (6) an den Seitenflächen des Formstempels angebracht sind.

## Ansprüche

1. Preßwerkzeug zur Herstellung von Formkörpern, insbesondere Blattfedern aus Faserverbundwerkstoffen, mit zwei gegeneinander bewegbaren Werkzeughälften, von denen die eine Werkzeughälfte eine dem Formkörper entsprechende Kavität und die andere Werkzeughälfte einen in die Kavität einführbaren Formstempel enthält, dadurch gekennzeichnet, daß der Formstempel (3) an seinen beiden Seiten Dichtleisten (5) aus elastischem Kunststoff aufweist.

2. Preßwerkzeug nach Anspruch 1, dadurch gekennzeichnet, daß die Dichtleisten (5) sich an beiden Seiten des Formstempels (3) über dessen gesamte Länge erstrecken.

3. Preßwerkzeug nach Anspruch 1, dadurch gekennzeichnet, daß die Dichtleisten (5) an den Steitenflächen des Formstempels (3) befestigt sind.

4. Preßwerkzeug nach Anspruch 1, dadurch gekennzeichnet, daß die Dichtleisten (5) form- und/oder kraftschlüssig mit dem Formstempel (3) verbunden sind.